# EUROPÄISCHE PATENTSCHRIFT

(11) **EP 3 424 871 B1**
(45) Veröffentlichungstag und Bekanntmachung des Hinweises auf die Patenterteilung: **27.08.2025**
(21) Anmeldenummer: 18177585.9
(22) Anmeldetag: 13.06.2018
(51) Int. Cl.: B66D 1/39, B66C 11/16, B66C 19/00, E02B 8/02, E02B 9/00, B08B 1/00

(54) **SEILWINDENANORDNUNG**
WINCH ASSEMBLY
DISPOSITIF DE TREUIL À CÂBLE

(30) Priorität: 05.07.2017 AT 15417 U
(43) Veröffentlichungstag der Anmeldung: 09.01.2019
(60) Teilanmeldung: 19210979.1
(73) Patentinhaber: Hans Künz GmbH, 6971 Hard (Vbg.) (AT)
(72) Erfinder: Klapper, Georg, 6971 Hard (AT)
(74) Vertreter: Torggler & Hofmann Patentanwälte - Rankweil

(56) Entgegenhaltungen:
- WO-A1-2006/047798
- BE-A- 569 613
- CH-A- 243 432
- CN-A- 102 285 603
- DE-A1- 4 204 153
- GB-A- 909 340
- US-A- 5 718 771

## Beschreibung

Die vorliegende Erfindung betrifft eine Seilwindenanordnung gemäß dem Oberbegriff des Patentanspruchs 1. Im Weiteren bezieht sich die Erfindung auf einen Kran, einen Fahrantrieb mit zumindest einer Seilwindenanordnung und eine Rechenreinigungseinrichtung.

Seilwindenanordnungen werden in vielfältigen Ausführungsformen zum Auf- und/oder Abwickeln zumindest eines Seils herangezogen, wobei das zumindest eine Seil meist auf eine kreiszylindrische Seiltrommel, die auch Winde genannt wird, auf- und/oder von der Seiltrommel abgewickelt wird. Das zumindest eine Seil ist meist spiralförmig, insbesondere wendelförmig bzw. schraubenlinienförmig, auf der Seiltrommel aufwickelbar oder aufgewickelt. Charakteristisch ist für gängige Seilwindenanordnungen ist, dass der Seilablaufpunkt des zumindest einen Seils, an welchem das Seil tangential auf die oder von der Seiltrommel auf- oder abläuft, ortsveränderlich ist. D.h., der Seilablaufpunkt bewegt sich während des Auf- oder Abwickelns des Seils entlang einer Richtung parallel zur Trommelachse der Seiltrommel. Diese Bewegung könnte man auch als ein "Wandern" des Seilablaufpunktes auf einem Trommelmantel der Seiltrommel während der Verdrehung der Seiltrommel bezeichnen. Das "Wandern" des Seilablaufpunkts entlang des Trommelmantels der Seiltrommel führt dazu, dass ein frei hängendes Seilende eines abschnittsweise auf der Seiltrommel aufgewickelten Seils, an dem beispielsweise eine Last befestigt ist, mit dem Seilablaufpunkt parallel zur Trommelachse mitbewegt wird, weshalb es während der Hub- bzw. Senkbewegung des Seils gleichzeitig auch zu einer, meist unerwünschten, überlagerten Verschiebung der Last in eine Richtung parallel zur Trommelachse kommt.

Um das zumindest eine von der Seiltrommel ablaufende Seil in eine vorbestimmte Richtung zu lenken, werden häufig Seilrollen eingesetzt. Seilrollen weisen eine umlaufende Seilrille auf, in welcher das Seil geführt ist. Ein wesentlicher Parameter einer Seilrolle ist der seitliche Anlaufwinkel des Seiles beim Einlaufen bzw. Auslaufen des Seiles in bzw. aus der Seilrille der Seilrolle. Der seitliche Anlaufwinkel ist der Winkel der seitlichen Ablenkung des Seils bezüglich einer Rillenebene in welcher die Seilrille der Seilrolle angeordnet ist. Ein großer seitlicher Anlaufwinkel, z.B. mehr als 4°, hat einen erheblichen Einfluss auf die Lebensdauer des Seils. Um den seitlichen Anlaufwinkel zu begrenzen, müssen Seilrollen deshalb in relativ großem Abstand von der Seiltrommel angeordnet sein.

Das Dokument DE 101 35 034 C1 offenbart eine Seilwindenanordnung mit einer Verschiebeeinheit, welche die Seiltrommel synchron zum Auf- und Abwickeln der Seile derart längsverschiebt, dass sich die jeweiligen Seilablaufpunkte, bezogen auf einen Hubwerksrahmen, jeweils immer an der gleichen Stelle befinden. Dadurch kann der seitliche Anlaufwinkel des Seils auf der jeweiligen Seilrolle konstant gehalten werden. Die Verschiebeeinheit weist in einer möglichen Ausführungsvariante einen Gewindespindeltrieb zur Verschiebung der Seiltrommel auf, wobei der Gewindespindeltrieb mit der Seiltrommelachse über einen Zahnriemen gekoppelt ist.

Die CN 102285603 A offenbart eine Seilwindenanordnung nach dem Oberbegriff des Anspruchs 1.

Aufgabe der Erfindung ist es, eine vorteilhafte Seilwindenanordnung der eingangs genannten Art bereitzustellen, welche einfach ausgebildet werden kann.

Erfindungsgemäß gelingt dies durch eine Seilwindenanordnung mit den Merkmalen des Anspruchs 1.

Bei der Seilwindenanordnung gemäß der Erfindung ist vorgesehen, dass die Spindelachse koaxial zur Trommelachse der Seiltrommel angeordnet ist. D.h., dass die Spindelachse auf einer gemeinsamen Achse mit der Trommelachse der Seiltrommel liegt. Dadurch kann ein einfacher Aufbau der Seilwindenanordnung realisiert werden.

Im Sinne der Erfindung handelt es sich beim Spindeltrieb um ein Schraubgetriebe. Insbesondere kann der Spindeltrieb gemäß der Erfindung eine Trapezgewindetrieb, Kugelgewindetrieb, Rollengewindetrieb mit Rollenrückführung, Planetenrollengewindetrieb, Steilgewindetrieb etc. sein. Der Spindeltrieb verbindet die Tragstruktur mit der Seiltrommel, wobei eine Verstellung des Spindeltriebs zu einer Relativverschiebung der Seiltrommel gegenüber der Tragstruktur führt. Die Verstellung des Spindeltriebs erfolgt dabei in Richtung der Spindelachse. Da die Trommelachse der Seiltrommel koaxial zur Spindelachse angeordnet ist, erfolgt die Relativverschiebung der Seiltrommel gegenüber der Tragstruktur ebenfalls in eine Richtung parallel zur Trommelachse bzw. zur Spindelachse.

Mit dem Ausdruck, wonach der Seilablaufpunkt "zumindest im Wesentlichen ortsfest" ist, ist gemeint, dass der Seilablaufpunkt während des Aufwickelns bzw. Abwickelns des Seils bezogen auf die Tragstruktur zumindest im Wesentlichen unbeweglich ist. Als Seilablaufpunkt wird insbesondere der Punkt bezeichnet, an welchem eine Längsmittenachse des Seils von einer schraubenförmigen Ausrichtung - welchen ein auf der Seiltrommel aufgewickelter Abschnitt des Seils einnimmt - in eine tangentiale Richtung - bezogen auf den Trommelmantel der Seiltrommel - übergeht. Der Seilablaufpunkt könnte auch als Seilauflaufpunkt oder als Seilauf- und ablaufpunkt bezeichnet werden. In diesem Zusammenhang bedeutet der Ausdruck "zumindest im Wesentlichen", dass sich der Seilablaufpunkt zwischen einem vollständig abgewickelten Zustands des Seils und einem vollständig aufgewickelten Zustand des Seils günstigerweise um weniger als den Betrag eines Seildurchmessers des Seils parallel zur Trommelachse bewegt.

Der Begriff Tragstruktur ist im Sinne der Erfindung weit zu fassen. Es kann sich bei der Tragstruktur beispielsweise um ein tragendes Bauteil einer Laufkatze eines Krans, einen Grundrahmen einer Rechenreinigungseinrichtung oder eines Fahrwerks handeln. Die Tragstruktur dient jedenfalls der Abstützung der Seiltrommel und der Aufnahme der an der Seiltrommel angreifenden Seilkräfte. Die Seiltrommel kann sich auf der Tragstruktur abstützen oder in anderer Art und Weise mit der Tragstruktur verbunden sein. Beispielsweise ist es auch denkbar und möglich, dass die Seiltrommel an der Tragstruktur hängt.

Die Seiltrommel ist an einem Lagergestell drehbar gelagert. Das Lagergestell könnte auch als Tragrahmen oder Trommelrahmen bezeichnet werden. Günstigerweise ist vorgesehen, dass, abgesehen von der Verdrehung der drehbar gelagerten Seiltrommel, keine Relativbewegung zwischen der Seiltrommel und dem Lagergestell möglich ist. Es ist vorgesehen, dass das Lagergestell günstigerweise gemeinsam mit der Seiltrommel relativ zur Tragstruktur verschoben werden kann. Um die Reibung zwischen dem die Seiltrommel lagernden und tragenden Lagergestell und der Tragstruktur beim Verschieben der Seiltrommel bzw. des Lagergestells relativ zur Tragstruktur zu verringern, kann die Seilwindenanordnung eine Gleitführung oder eine Rollenführung aufweisen.

Vorzugsweise ist vorgesehen, dass sich die Spindel, zumindest in einer Endstellung, zumindest abschnittsweise in einen Hohlraum der Seiltrommel hinein erstreckt. Dadurch kann eine besonders kompakte Ausführung der Seilwindenanordnung realisiert werden. Die Seilwindenanordnung weist günstigerweise zwei Endstellungen auf, wobei die Endstellungen den Verfahrweg der Seiltrommel gegenüber der Tragstruktur, in einander entgegengesetzte, parallel zur Spindelachse bzw. zur Trommelachse ausgerichtete, Richtungen, begrenzen.

Der Hohlraum der Seiltrommel könnte in radialer Richtung bezogen auf die Trommelachse vollständig von einem Trommelmantel der Seiltrommel begrenzt sein. Im Weiteren könnte die Seiltrommel zwei einander gegenüberliegende Trommelflansche aufweisen, welche den Hohlraum in axialer Richtung bezogen auf die Trommelachse begrenzen.

Besonders bevorzugt ist vorgesehen, dass die Spindel des Spindeltriebs in einer der Endstellungen über zumindest 50%, vorzugsweise zumindest 70%, der Länge der Spindel, im Hohlraum der Seiltrommel angeordnet ist.

In einer bevorzugten Ausführungsform weist die Spindel ein Außengewinde mit einer Ganghöhe auf, wobei die Ganghöhe des Außengewindes zumindest dem Seildurchmesser des zumindest einen Seils entspricht. Die Ganghöhe bezieht sich auf den Abstand von zwei Gewindegängen bezogen auf eine Richtung parallel zur Spindelachse. Die Ganghöhe gibt das Maß der Verstellung einer Spindelmutter des Spindeltriebs bezogen auf eine Richtung parallel zur Spindelachse bei einer Relativverdrehung der Spindelmutter gegenüber der Spindel um 360°, d.h. um eine Umdrehung, an. Mit dem Seildurchmesser ist im Sinne der Erfindung der Außendurchmesser des Seils gemeint. Ein Seil weist in einem Querschnitt orthogonal zur Längsmittenachse des Seils gesehen häufig einen vom Kreis abweichenden Querschnitt auf. Als Seildurchmesser könnte auch der Durchmesser eines kleinsten, den Querschnitt des Seil umgreifenden, Umkreises bezeichnet werden.

Vorzugsweise ist vorgesehen, dass die Seiltrommel einen Trommelmantel mit zumindest einer spiralförmigen Rille zur Aufnahme zumindest eines der Seile aufweist, wobei eine Ganghöhe der spiralförmigen Rille der Ganghöhe des Außengewindes der Spindel entspricht. Die zumindest eine spiralförmige Rille des Trommelmantels erstreckt sind günstigerweise wendelförmig entlang der, insbesondere um die, Trommelachse. Die zumindest eine Rille des Trommelmantels könnte auch als helixförmig oder schraubenlinienförmig bezeichnet werden. Die zumindest eine Rille kann sich über die gesamte Längserstreckung des Trommelmantels schraubenförmig erstrecken. Es ist aber auch denkbar und möglich, dass der Trommelmantel mehrere Rillen aufweist, die, bezogen auf die Richtung der Trommelachse, hintereinander und voneinander beabstandet angeordnet sein können. In anderen Ausführungsformen ist es denkbar und möglich, dass die spiralförmigen Rillen ineinander verschachtelt sind, d.h., dass die Ganghöhe einer jeweiligen spiralförmigen Rille größer ist als der Seildurchmesser des zumindest einen Seils. Beispielsweise könnte die Ganghöhe ein ganzzahliges Vielfaches des Seildurchmessers betragen. Es ist z.B. möglich, dass vier kongruente spiralförmige Rillen, die jeweils eine Ganghöhe aufweisen die dem vierfachen Seildurchmesser entspricht, bezogen auf eine Umfangsrichtung der Trommelachse der Seiltrommel um jeweils eine Viertelumdrehung versetzt sind. Dies ist jedoch nur ein konkretes Ausführungsbeispiel und kann auf eine beliebige Anzahl von Seilen übertragen werden. Die Gesamtheit der Rillen des Trommelmantels könnte auch als mehrgängige Rillung bezeichnet werden. In einer möglichen anderen Ausführungsform könnte eine Außenoberfläche des Trommelmantels kreiszylindermantelförmig, d.h. im Wesentlichen glatt, ausgeführt sein. D.h., dass dann auf einen gerillten Trommelmantel verzichtet wird.

In einer möglichen Ausführungsform gemäß der Erfindung könnte vorgesehen sein, dass die Spindel verdrehfest und, zumindest in axialer Richtung bezogen auf die Spindelachse, unverschiebbar an der Tragstruktur festgelegt ist. Besonders bevorzugt ist dann vorgesehen, dass die Spindel an der Tragstruktur fixiert ist, d.h. dass alle Freiheitsgrade der Spindel in Bezug auf die Tragstruktur gesperrt sind.

Bei der Erfindung ist vorgesehen, dass eine in die Spindel eingreifende Spindelmutter des Spindeltriebs verdrehfest an der Seiltrommel befestigt ist. Dabei kann also vorgesehen sein, dass die Drehbewegung der Seiltrommel direkt auf die Spindelmutter übertragen wird.

In einer anderen möglichen Ausführungsformen gemäß der Erfindung kann vorgesehen sein, dass der Spindeltrieb einen Spindelantrieb zur Verdrehung der Spindel relativ zur Tragstruktur aufweist. Es ist dabei denkbar, dass es während des Betriebs zu einer Überlagerung der Seiltrommel-Verdrehbewegung mit der Verdrehung der Spindel des Spindeltriebs kommt. Insgesamt ist im Sinne der Erfindung aber immer vorgesehen, dass der Seilablaufpunkt des zumindest einen Seils bezogen auf die Tragstruktur, zumindest im Wesentlichen, ortsfest ist.

Die vorliegende Erfindung bezieht sich auch auf einen Kran, insbesondere einen Portalkran, zum Transport zumindest eines Containers oder einer sonstigen Last, wobei der Kran zumindest eine, auf einem Kranträger des Krans verfahrbar gelagerte, Laufkatze und eine Lastaufnahmevorrichtung zur Verbindung mit dem Container oder der sonstigen Last aufweist, wobei die Lastaufnahmevorrichtung mittels Seilen der Laufkatze heb- und senkbar an der Laufkatze hängt, wobei die Laufkatze zumindest eine erfindungsgemäße Seilwindenanordnung zum Auf- und/oder Abwickeln der Seile der Laufkatze aufweist.

Es könnte vorgesehen sein, dass für jedes Seil der Laufkatze eine eigene Seilwindenanordnung vorgesehen ist. Besonders bevorzugt ist es, wenn mehrere Seile, z.B. vier Seile, auf einer gemeinsamen Seiltrommel aufwickelbar sind. Wie bereits im Zusammenhang mit den möglichen Ausführungsformen der Seilwindenanordnung ausgeführt, können die Rillen zur Aufnahme eines jeweiligen Seiles bezogen auf die Richtung der Trommelachse hintereinander, d.h. beabstandet voneinander angeordnet sein. Auch Ausführungsvarianten von Seiltrommeln mit mehrgängigen Rillen sind denkbar und möglich.

Im Weiteren bezieht sich die Erfindung auf einen Fahrantrieb zum Verschieben einer entlang von Fahrschienen verfahrbaren Transporteinheit, wobei der Fahrantrieb zumindest eine erfindungsgemäße Seilwindenanordnung umfasst. Es kann sich bei der verfahrbaren Transporteinheit beispielsweise um einen Kran handeln. In einer anderen Ausführungsform kann es sich bei der verfahrbaren Transporteinheit um eine, auf einem Kranträger eines Krans verfahrbar gelagerte, Laufkatze handeln. In bevorzugten Ausführungsformen ist die Seilwindenanordnung an der Transporteinheit angeordnet. Besonders vorteilhaft ist es, wenn die Trommelachse der Seiltrommel parallel zu einer Längserstreckung der Fahrschienen ausgerichtet ist.

Die Erfindung bezieht sich auch auf eine Rechenreinigungseinrichtung zur Reinigung eines Rechens, insbesondere einer Wasserkraftanlage, wobei die Rechenreinigungseinrichtung eine Reinigungsvorrichtung, insbesondere einen Reinigungsharken oder ein Greifwerkzeug, zur Aufnahme von am Rechen aufgestautem Treibgut und eine Antriebsanordnung zur Betätigung der Reinigungsvorrichtung aufweist, wobei die Antriebsanordnung zumindest eine erfindungsgemäße Seilwindenanordnung aufweist. Die Seilwindenanordnung ermöglicht es, dass bei Antriebsanordnungen der Reinigungsvorrichtung auf eine komplizierte Seilrollenanordnung zur Umlenkung der Seile verzichtet werden kann.

Die Antriebsanordnung der Rechenreinigungseinrichtung ermöglicht insbesondere das Öffnen, Schließen oder das Schwenken der Reinigungsvorrichtung zum Aufnehmen oder Freigeben von Treibgut. Im Weiteren könnte alternativ oder zusätzlich vorgesehen sein, dass die Rechenreinigungseinrichtung sich auf Fahrschienen abstützt und einen, eine erfindungsgemäße Seilwindenanordnung aufweisenden Fahrantrieb zum Verfahren der Rechenreinigungseinrichtung entlang der Fahrschienen aufweist.

Weitere Vorteile und Einzelheiten der Erfindung werden im Folgenden anhand der in den Figuren gezeigten Ausführungsbeispiele gemäß der Erfindung erläutert. In diesen Figuren zeigen:
- Fig. 1: eine Ansicht eines ersten Ausführungsbeispiels einer erfindungsgemäßen Seilwindenanordnung in einer ersten Endstellung;
- Fig. 2: die Seilwindenanordnung gemäß Fig. 1 in einer zweiten Endstellung;
- Fig. 3 und 4: eine nicht unter den Schutzumfang der Ansprüche fallende Seilwindenanordnung in Darstellungen analog zu den Fig. 1 und 2;
- Fig. 5 und 6: eine nicht unter den Schutzumfang der Ansprüche fallende Seilwindenanordnung in Ansichten analog zu den Fig. 1 und 2;
- Fig. 7 und 8: einen erfindungsgemäßen Kran in zwei unterschiedlichen Arbeitspositionen;
- Fig. 9: eine isometrische Ansicht einer entlang von Laufkatzenschienen verschiebbaren Laufkatze des Krans gemäß Fig. 7 in der in Fig. 7 gezeigten Arbeitsposition;
- Fig. 10: eine Ansicht orthogonal zu einer Längserstreckung der Laufkatzenschienen nach Fig. 9;
- Fig. 11: einen Grundriss der Laufkatze nach Fig. 9;
- Fig. 12 bis 14: Darstellungen analog zu den Fig. 9 bis 11 für die in Fig. 8 dargestellte Arbeitsposition des Krans;
- Fig. 15 bis 18: ein alternatives Ausführungsbeispiel einer Seilwindenanordnung gemäß der Erfindung in zwei Endstellungen;
- Fig. 19: eine isometrische Ansicht einer erfindungsgemäßen Rechenreinigungseinrichtung mit einem Fahrantrieb;
- Fig. 20: den Fahrantrieb der Rechenreinigungseinrichtung nach Fig. 19 im Detail;
- Fig. 21: einen Grundriss zum Fahrantrieb gemäß Fig. 20 in einer ersten Endstellung;
- Fig. 22: einen Grundriss zum Fahrantrieb gemäß Fig. 20 in einer zweiten Endstellung;
- Fig. 23: ein Ausführungsbeispiel einer Reinigungsvorrichtung für eine Rechenreinigungseinrichtung;
- Fig. 24: eine isometrische Ansicht der Seilwindenanordnung der Reinigungsvorrichtung gemäß Fig. 23;
- Fig. 25: einen Grundriss der Seilwindenanordnung gemäß Fig. 24 in einer ersten Endstellung, und
- Fig. 26: einen Grundriss der Seilwindenanordnung nach Fig. 24 in einer zweiten Endstellung.

Aus Gründen der Übersichtlichkeit sind in den Figuren nicht jeweils sämtliche Bezugszeichen eingetragen.

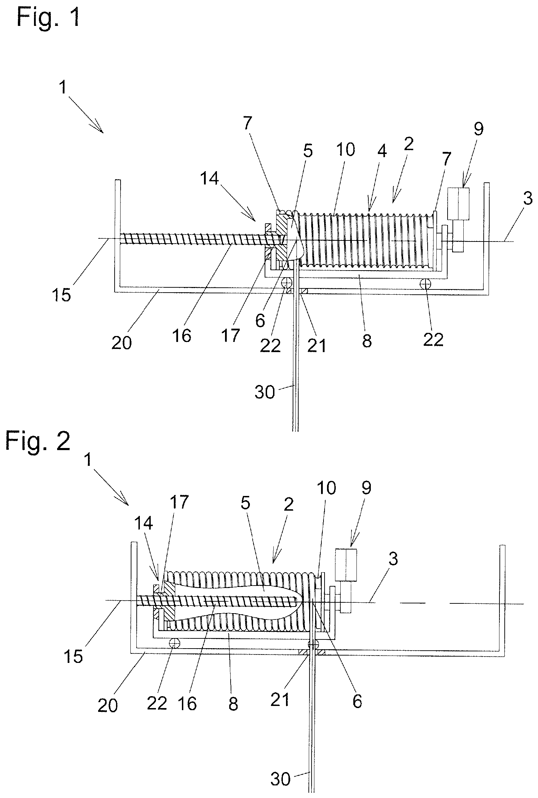

Die in den Fig. 1 und 2 dargestellte erfindungsgemäße Seilwindenanordnung 1 weist eine Seiltrommel 2 zum Auf- und/oder Abwickeln eines Seils 30 und ein Lagergestell 8 zur drehbaren Lagerung der um eine Trommelachse 3 drehbaren Seiltrommel 2 auf. Die, beispielsweise mit Wälzlagern ausgeführte, Lagerung der Seiltrommel 2 am Lagergestell 8 ist in den Figuren 1 und 2 nicht gesondert dargestellt. Derartige Anordnungen sind allerdings in vielfältigen Ausführungsformen allgemein bekannt.

Die Seiltrommel 2 weist einen Trommelmantel 4 und zwei Trommelflansche 7 auf, welche, in axialer Richtung bezogen auf die Trommelachse 3 an einander gegenüberliegenden Seiten, an den Trommelmantel 4 anschließen. Im Inneren der Seiltrommel 2 ist ein Hohlraum 5 ausgebildet, welcher, in radialer Richtung bezogen auf die Trommelachse 3, vom Trommelmantel 4 begrenzt ist. In axialer Richtung, bezogen auf die Trommelachse 3, ist der Hohlraum 5, von den Trommelflanschen 7 begrenzt.

Der Trommelmantel 4 weist im Ausführungsbeispiel eine spiralförmige Rille 10 zur Aufnahme des Seils 30 auf. Die spiralförmige Rille 10 ist schraubenlinienförmig ausgebildet, d. h. nach Art einer sich entlang der Trommelachse 3 erstreckenden Helix. Die Rille 10 könnte auch als Rillung bezeichnet werden. Die Ganghöhe der spiralförmigen Rille 10 entspricht im Ausführungsbeispiel dem Seildurchmesser des Seils 30. Die Ganghöhe der Rille 10 könnte in einer anderen Ausführungsvariante auch eine Ganghöhe aufweisen, die größer ist als der Seildurchmesser des Seils 30, d.h., dass dann die Windungen des auf dem Trommelmantel 4 aufgewickelten Abschnitts des Seils 30 voneinander beabstandet sind. Der Trommelmantel 4 der Seiltrommel 2 könnte in anderen Ausführungsvarianten auch ohne Rillen ausgeführt sein. Das heißt, die Außenoberfläche des Trommelmantels 4 könnte beispielsweise kreiszylindermantelförmig, d.h. glatt, ausgebildet sein.

Die Seilwindenanordnung 1 weist im Weiteren einen Trommelantrieb 9 zum Verdrehen der Seiltrommel 2 um die Trommelachse 3 relativ zum Lagergestell 8 auf. Beim Trommelantrieb 9 kann es sich, wie in den Figuren dargestellt, um einen Getriebemotor handeln.

Das Lagergestell 8 stützt sich mittels Stützrollen 22 der Seilwindenanordnung 1 auf einer Tragstruktur 20 ab. Die Stützrollen 22 erleichtern die Relativbewegung des Lagergestells 8 und damit der Seiltrommel 2 gegenüber der Tragstruktur 20. In einer anderen Ausführungsvariante könnten anstatt Stützrollen 22 auch Gleitkufen oder ähnliches verwendet werden.

Die Tragstruktur 20 ist in den Fig. 1 und 2 nur schematisch dargestellt, um das Prinzip der erfindungsgemäßen Seilwindenanordnung 1 zu verdeutlichen. Im Zusammenhang mit den noch zu erläuternden Anwendungsbeispielen der erfindungsgemäßen Seilwindenanordnung 1 wird auf mögliche Ausführungsvarianten der Tragstruktur 20 eingegangen. Die Tragstruktur 20 weist im in den Fig. 1 und 2 dargestellten Ausführungsbeispiel einen Seildurchlass 21 auf, durch welchen das Seil 30 hindurchgefädelt ist. Ein Seildurchlass 21 ist jedoch nicht zwingend.

Die Seilwindenanordnung 1 weist einen Spindeltrieb 14 zum Verschieben der Seiltrommel 2 relativ zur Tragstruktur 20 auf. Der Spindeltrieb 14 umfasst eine sich entlang einer Spindelachse 15 erstreckende Spindel 16 und eine Spindelmutter 17, welche in die Spindel 16 eingreift. Der Spindeltrieb 14 verbindet die Tragstruktur 20 mit der Seiltrommel 2. Die Spindelachse 15 des Spindeltriebs 14 ist koaxial zur Trommelachse 3 der Seiltrommel 2 angeordnet.

Die Spindel 16 ist im ersten Ausführungsbeispiel verdrehfest und in axialer Richtung bezogen auf die Spindelachse 15 unverschiebbar an der Tragstruktur 20 festgelegt. Auch in alle Richtungen orthogonal zur Spindelachse 15 ist die Spindel 16 unverschiebbar an der Tragstruktur 20 fixiert.

Im ersten Ausführungsbeispiel ist vorgesehen, dass die Spindelmutter 17 verdrehfest an der Seiltrommel 2 befestigt ist. Eine Verdrehung der Seiltrommel 2 mittels des Trommelantriebs 9 führt daher zu einer entsprechenden Verdrehung der Spindelmutter 17.

Eine Verstellung der Spindelmutter 17 relativ zur Spindel 16 entlang der Spindelachse 15 führt zu einer entsprechenden Verstellung der Seiltrommel 2 entlang der Trommelachse 3 relativ zur Tragstruktur 20. Die Seilwindenanordnung 1 weist im Ausführungsbeispiel zwei Endstellungen auf, die den Verschiebeweg der Spindelmutter 17 relativ zur Spindel 16 begrenzen. Insgesamt ist somit auch die Seiltrommel 2 zwischen der ersten Endstellung und der zweiten Endstellung der Seilwindenanordnung 1 relativ zur Tragstruktur 20 verschiebbar.

Zusammenfassend ist im ersten Ausführungsbeispiel somit vorgesehen, dass das Lagergestell 8 gemeinsam mit der Seiltrommel 2 und der Spindelmutter 17 und dem Trommelantrieb 9 entlang der Trommelachse 3 relativ zur Tragstruktur 20 verschiebbar ist.

Im Ausführungsbeispiel ist der Spindeltrieb 14 als Trapezgewindetrieb ausgebildet. D.h., die Spindelmutter 17 weist ein Trapez-Innengewinde und die Spindel 16 ein Trapez-Außengewinde auf, welche ineinander greifen. Auch andere Ausführungsvarianten von Spindeltrieben sind grundsätzlich denkbar und möglich, wie dies bereits eingangs erwähnt ist. Beispielsweise könnte der Spindeltrieb 14 auch ein Flachgewindetrieb sein.

Im ersten Ausführungsbeispiel ist vorgesehen, dass die Ganghöhe der spiralförmigen Rille 10 einer Ganghöhe des Außengewindes der Spindel 16 entspricht. Eine Verdrehung der Seiltrommel 2 um eine Umdrehung, d.h. um 360°, führt daher zu einer Relativverschiebung der Seiltrommel 2 gegenüber der Tragstruktur 20, in einer Richtung parallel zur Trommelachse 4, um die Ganghöhe des Außengewindes der Spindel 16. Dadurch kann gewährleistet werden, dass ein Seilablaufpunkt 6 des Seils 30, an welchem das Seil 30 tangential von der Seiltrommel 2 auf- und/oder abläuft, bezogen auf die Tragstruktur 20, zumindest im Wesentlichen ortsfest ist. Da die Ganghöhe des Außengewindes der Spindel 16 im ersten Ausführungsbeispiel der Ganghöhe der spiralförmigen Rille 10 des Trommelmantels 4 entspricht, ist somit zwangsweise sichergestellt, dass der Seilablaufpunkt 6 in Bezug auf die Tragstruktur 20 stets ortsfest ist.

In Fig. 1 ist die Seiltrommel 2 in der ersten Endstellung der Seilwindenanordnung 1 dargestellt, in welcher das Seil 30, abgesehen von einer verbleibenden Restlänge, welche auf der Seiltrommel 2 aufgewickelt ist, von der Seiltrommel 2 abgewickelt ist.

In Fig. 2 ist die zweite Endstellung dargestellt, in welcher das Seil 30 maximal auf die Seiltrommel 2 aufgewickelt ist. In einer Zusammenschau der Fig. 1 und 2 ist direkt ersichtlich, dass der Seilablaufpunkt 6 in Bezug auf die Tragstruktur 20 ortsfest, d.h. unbeweglich, ist. Dadurch ist sichergestellt, dass das Seil 30 unabhängig von der Länge des auf die Seiltrommel 2 aufgewickelten Abschnitts des Seils 30 durch den Seildurchlass 21 ablaufen kann.

Im gezeigten Ausführungsbeispiel ist vorgesehen, dass sich die Spindel 16, insbesondere ein das Außengewinde aufweisender Abschnitt der Spindel 16, in der zweiten Endstellung, vgl. Fig. 2, über zumindest 70% der Längserstreckung der Spindel 16, insbesondere der Längserstreckung des Außengewindes der Spindel 16, in den Hohlraum 5 der Seiltrommel 2 hinein erstreckt.

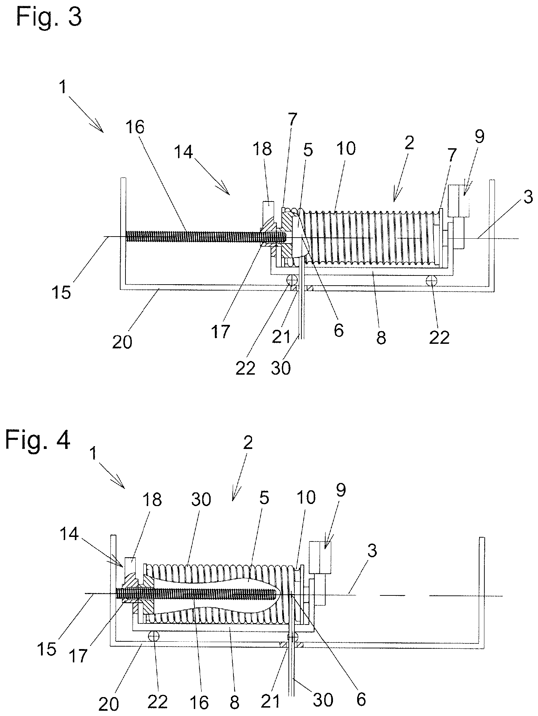

In den Fig. 3 und 4 ist eine nicht unter den Schutzumfang fallende Seilwindenanordnung 1 dargestellt. Der Aufbau der Seiltrommel 2, des Trommelantriebs 9 und der Tragstruktur 20 entspricht jenem des Ausführungsbeispiels der Fig. 1 und 2, sodass in den Erläuterungen zu den Fig. 3 und 4 hauptsächlich auf die Unterschiede zum Ausführungsbeispiel gemäß der Fig. 1 und 2 hingewiesen wird. Abgesehen von den im Folgenden angeführten Unterschieden gelten die Erläuterungen zum Ausführungsbeispiel der Fig. 1 und 2 auch bei den Fig. 3 und 4.

In den Fig. 3 und 4 ist vorgesehen, dass das Außengewinde der Spindel 16 eine Ganghöhe aufweist, welche kleiner ist als der Seildurchmesser des Seils 30. Entsprechend ist die Ganghöhe des Außengewindes der Spindel 16 kleiner als die Ganghöhe der spiralförmigen Rille 10 des Trommelmantels 4 der Seiltrommel 2. Um sicherzustellen, dass der Seilablaufpunkt 6 des Seils 30, an welchem das Seil 30 tangential von der Seiltrommel 2 abläuft und/oder auf die Seiltrommel 2 aufläuft, bezogen auf die Tragstruktur 20 zumindest im Wesentlichen ortsfest ist, weist der Spindeltrieb 14 ein Übersetzungsgetriebe 18 auf. Das Übersetzungsgetriebe 18 überträgt die Drehbewegung der Seiltrommel 2 auf die in die Spindel 16 eingreifende Spindelmutter 17 des Spindeltriebs 14. Das heißt, dass die Drehzahl der Spindelmutter 17 im zweiten Ausführungsbeispiel unterschiedlich zur Drehgeschwindigkeit der Seiltrommel 2 ist. Das Übersetzungsgetriebe 18 ist dabei so konfiguriert, dass ein Verschubmaß der Spindelmutter 17 auf der Spindel 16, bei einer Verdrehung der Seiltrommel 2 um eine Umdrehung, der Ganghöhe der Rille 10 der Seiltrommel 2 bzw. dem Seildurchmesser des Seils 30 entspricht.

In den Fig. 3 und 4 ist vorgesehen, dass das Übersetzungsgetriebe 18 verdrehfest am Lagergestell 8 befestigt ist und die Verdrehbewegung der Seiltrommel 2 an die Spindelmutter 17, mit der entsprechenden Übersetzung der Drehzahl, überträgt.

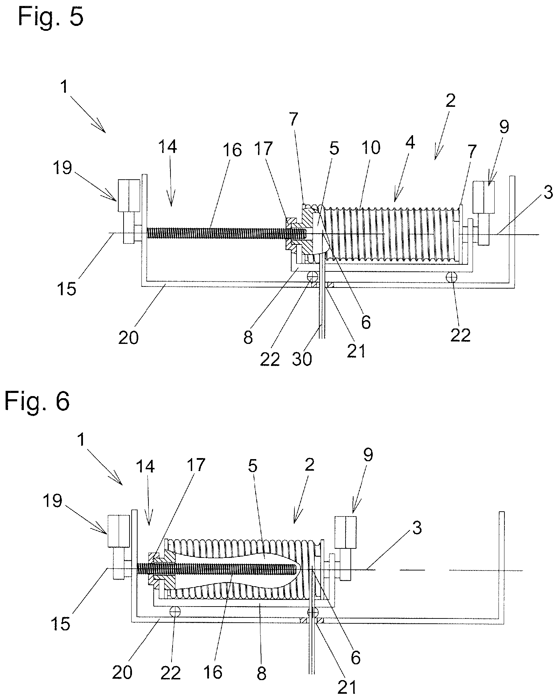

In den Fig. 5 und 6 ist ein nicht unter den Schutzumfang der Ansprüche fallende Seilwindenanordnung 1 dargestellt. Der Aufbau der Seiltrommel 2, des Trommelantriebs 9 und der Tragstruktur 20 entspricht jenem des ersten Ausführungsbeispiels gemäß der Fig. 1 und 2, sodass in den Erläuterungen zu den Fig. 5 und 6 hauptsächlich auf die Unterschiede zum ersten Ausführungsbeispiel hingewiesen wird. Abgesehen von den im Folgenden angeführten Unterschieden gelten die Erläuterungen zum ersten Ausführungsbeispiel auch bei den Fig. 5 und 6.

In den Fig. 5 und 6 ist - ähnlich zu den Fig. 3 und 4 - vorgesehen, dass das Außengewinde der Spindel 16 eine kleinere Ganghöhe aufweist als der Seildurchmesser des Seils 30. Entsprechend ist die Ganghöhe des Außengewindes der Spindel 16 auch kleiner als die Ganghöhe der spiralförmigen Rille 10 des Trommelmantels 4 der Seiltrommel 2. Dies ist allerdings nicht zwingend, es könnte in einer alternativen Ausführungsvariante auch vorgesehen sein, dass die Ganghöhe des Außengewindes der Spindel 16 zumindest dem Seildurchmesser des Seils 30 und/oder zumindest der Ganghöhe der spiralförmigen Rille 10 entspricht.

Der Spindeltrieb 14 weist in den Fig. 5 und 6 einen Spindelantrieb 19 zur Verdrehung der Spindel 16 um die Spindelachse 15 relativ zur Tragstruktur 20 auf. Die Spindelmutter 17 ist verdrehfest am Lagergestell 8 befestigt. Eine Verdrehung der Spindel 16 mittels des Spindelantriebs 19 bewirkt eine Relativbewegung der Seiltrommel 2 gegenüber der Tragstruktur 20. Der Spindelantrieb 19 wird mittels einer nicht näher dargestellten Steuerelektronik derart angesteuert, dass der Seilablaufpunkt 6 des Seils 30, an welchem das Seil 30 tangential von der Seiltrommel 2 auf- und/oder abläuft, bezogen auf die Tragstruktur 20 zumindest im Wesentlichen ortsfest ist. In anderen Worten wird der Spindelantriebs 19 mittels der Steuerelektronik derart angesteuert, dass die Verdrehbewegung der Seiltrommel 2 und die Verstellung der Seiltrommel 2 mittels des Trommelantriebs 9 um die Trommelachse 3 in eine Richtung parallel zur Trommelachse 3 aufeinander abgestimmt, d.h. synchron, sind, wobei der Seilablaufpunkt 6 zumindest im Wesentlichen ortsfest in Bezug auf die Tragstruktur 20 ist. Die Steuerelektronik könnte hierzu beispielsweise gleichzeitig den Trommelantrieb 9 und den Spindelantrieb 19 ansteuern, um eine synchrone Ansteuerung der Seiltrommel 2 und der Spindel 16 zu bewirken.

In einer zu Fig. 5 und 6 alternativen erfindungsgemäßen Ausführungsvariante wäre es denkbar, dass die Spindelmutter 17 an der Seiltrommel 2 verdrehfest fixiert ist. Dann erfolgt günstigerweise eine Überlagerung der Drehbewegung der Seiltrommel 2 mit jener der angetriebenen Spindel 16. Anhand der Steuerelektronik kann dabei ebenso sichergestellt werden, dass der Seilablaufpunkt 6 in Bezug auf die Tragstruktur 20 zumindest im Wesentlichen ortsfest ist.

Im Folgenden wird nun auf beispielhafte Anwendungen erfindungsgemäßer Seilwindenanordnung 1 eingegangen. Jede der bislang beschriebenen erfindungsgemäßen Ausführungsvarianten kann grundsätzlich bei den nachfolgend erläuterten Anwendungen eingesetzt werden. Der Einfachheit halber beziehen sich die nachfolgend beschriebenen Ausführungsbeispiele auf spezielle Ausführungsvarianten der oben erläuterten ersten Ausführungsform der Seilwindenanordnung 1. Die im Folgenden erläuterten Modifikationen, die beispielsweise die Anzahl der auf einer Seiltrommel aufwickelbaren Seile betreffen, sind gleichermaßen auf die erwähnten weiteren Ausführungsformen erfindungsgemäßer Seilwindenanordnungen übertragbar.

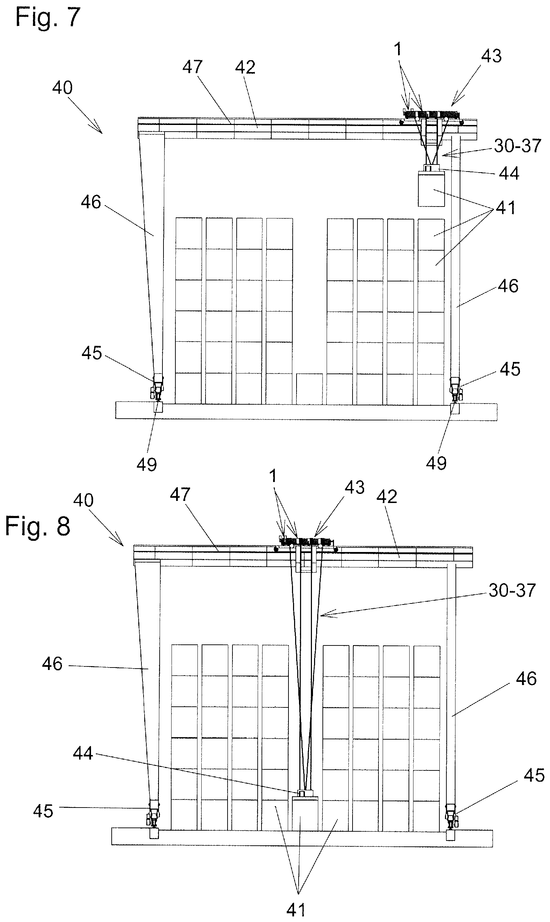

In den Fig. 7 bis 14 ist ein als Portalkran ausgebildeter Kran 40 zum Transport von Containern 41 in einem Containerterminal gezeigt. Der Kran 40 ist bezogen auf eine Richtung orthogonal zur Zeichnungsebene horizontal verschiebbar, wobei sich der Kran 40 mit Fahrwerken 45 des Krans 40 auf Kranschienen 49 abstützt, vgl. Fig. 7. Die Fahrwerke 45 könnten in einer anderen Ausführungsform des Krans 40 auch luftbereift sein und direkt auf dem Untergrund fahren. Der Kran 40 weist im Weiteren einen Kranträger 42 auf, welcher den Bereich zwischen den Kranschienen 49, d. h. eine Abstellfläche für Container 41, überspannt. Der Kranträger 42 stützt sich über Steher 46 des Krans 40 auf den Fahrwerken 45 ab. Auf dem Kranträger 42, der auch als Hauptträger bezeichnet werden kann, ist eine Laufkatze 43 verfahrbar gelagert. Die Laufkatze 43 stützt sich mittels nicht näher bezeichneter Laufrollen auf, auf dem Kranträger 42 befestigten, Laufkatzenfahrschienen 47 ab. Im Weiteren umfasst der Kran 40 eine Lastaufnahmevorrichtung 44 zur Verbindung mit zumindest einem Container 41. Die Lastaufnahmevorrichtung 44 hängt mit Seilen 30 bis 37 der Laufkatze 43 an der Laufkatze 43 und kann relativ zur Laufkatze 43 durch Verlängern oder Verkürzen der freien Länge der Seile 30 bis 37 in vertikaler Richtung bewegt werden. All dies ist im Stand der Technik an sich bekannt.

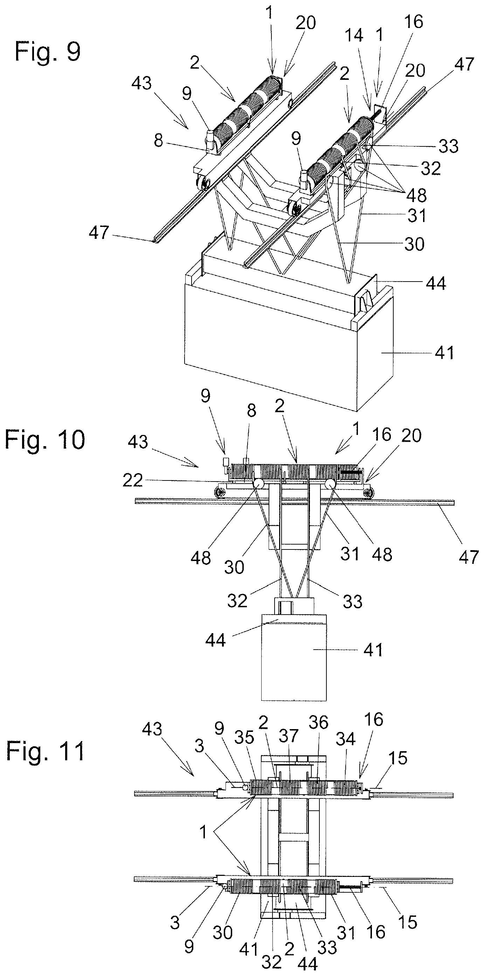

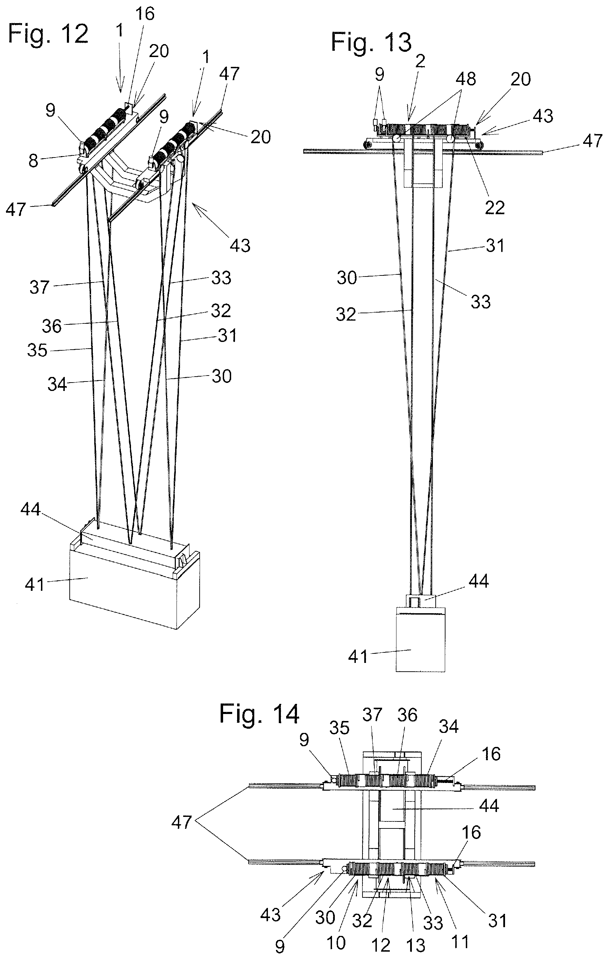

Die sich zwischen der Laufkatze 43 und der Lastaufnahmevorrichtung 44 erstreckenden Seile 30 bis 37 bilden gemeinsam einen Seilschacht, auch Seilturm genannt. Durch eine Zusammenschau der Fig. 7 und 8 ist ersichtlich, dass die Geometrie des Seilschachts, welcher von den Seilen 30 bis 37 aufgespannt wird, in Abhängigkeit von der vertikalen Position der Lastaufnahmevorrichtung 44 variiert. Insbesondere verändert sich die freie Länge der Seile 30 bis 37 und die Relativwinkel zwischen einzelnen Seilen 30 bis 37 zueinander, vgl. auch Fig. 9 und 12.

Die Laufkatze 43 weist im dargestellten Ausführungsbeispiel zwei Seilwindenanordnungen 1 zum Auf- und/oder Abwickeln der Seile 30 bis 37 der Laufkatze 43 auf. Im Ausführungsbeispiel sind die Seile 30 bis 33 auf einer ersten Seiltrommel 2 und die Seile 34 bis 37 auf einer zweiten Seiltrommel 2 aufwickelbar. Die Gesamtheit der Seile 30 bis 33 könnte auch als erste Seilgruppe und die Gesamtheit der Seile 34 bis 37 als zweite Seilgruppe bezeichnet werden. Im Ergebnis sind die Seile 30 bis 33, d.h. die erste Seilgruppe, und die Seile 34 bis 37, d.h. die zweite Seilgruppe, jeweils synchron auf die jeweilige Seiltrommel 2 aufgewickelt oder von der jeweiligen Seiltrommel 2 abwickelbar.

Die jeweilige Seilwindenanordnung 1 umfasst eine um eine Trommelachse 3 drehbar gelagerte Seiltrommel 2 zum Auf- und Abwickeln der jeweiligen Seilgruppe, wobei die Seilwindenanordnung 1 analog zum ersten Ausführungsbeispiel gemäß der Fig. 1 und 2, ausgebildet ist. D.h., die Seilwindenanordnung 1 weist einen Spindeltrieb 14 zum Verschieben der Seiltrommel 2 relativ zur Tragstruktur 20 der Laufkatze 43 auf. Der Spindeltrieb 14 umfasst eine sich entlang einer Spindelachse 15 erstreckende Spindel 16 und eine Spindelmutter 14, welche in die Spindel 16 eingreift. Der Spindeltrieb 14 verbindet die Tragstruktur 20 mit der Seiltrommel 2. Die Spindelachse 15 ist, wie lediglich in Fig. 11 dargestellt, koaxial zur Trommelachse 3 der Seiltrommel 2 angeordnet. Die Spindel 16 ist - analog zu dem in Fig. 1, 2 dargestellten Ausführungsbeispiel - verdrehfest an der Tragstruktur 20 fixiert. Die Ganghöhe des Außengewindes der Spindel 16 entspricht der Ganghöhe der spiralförmigen Rillen 10 bis 13, wobei letztere in Fig. 14 für eine der Seiltrommeln 2 eingezeichnet sind. Der Spindeltrieb 14 ermöglicht eine Verstellung der Seiltrommel 2 relativ zur Tragstruktur 20 der Laufkatze 43. Das Lagergestell 8 der Seilwindenanordnung 1 stützt sich mittels Stützrollen 22 auf der Tragstruktur 20 der Laufkatze 43 ab. Ansonsten wird hinsichtlich der Ausbildung der Seilwindenanordnung 1 auf die Erläuterungen zu dem in den Fig. 1, 2 dargestellten ersten Ausführungsbeispiel verwiesen.

Der Trommelmantel 4 der jeweiligen Seiltrommel 2 weist beim gezeigten Ausführungsbeispiel des Krans 40 vier, bezogen auf eine Richtung parallel zur Trommelachse 3, voneinander beabstandete Seilrillenabschnitte mit jeweils einer Rille 10, 11, 12 und 13 auf, vgl. Fig. 14 in welcher die Rillen 10-13 für eine der Seiltrommeln 2 eingezeichnet sind. D.h., die Seile 30 bis 33 bzw. 34 bis 37 einer jeweiligen Seilgruppe laufen, bezogen auf die Längserstreckung der jeweiligen Seiltrommel 2, beabstandet voneinander von der Seiltrommel 2 ab bzw. auf die Seiltrommel 2 auf.

Die Laufkatze 43 weist Seilrollen 48 zur Ablenkung eines jeweiligen Seils 30 bis 37 auf. Die Seilrollen 48 weisen eine umlaufende Seilrille auf, in welcher das jeweilige Seil 30 bis 37 geführt ist. Die Seilrollen 48 haben den Zweck, das jeweilige Seil 30 bis 37 an einen Verankerungspunkt eines jeweiligen Seils 30 bis 37 an der Lastaufnahmevorrichtung 44 abzulenken.

Analog zu dem in den Fig. 1 und 2 dargestellten ersten Ausführungsbeispiel der Seilwindenanordnung 1 ist vorgesehen, dass ein jeweiliger Seilablaufpunkt des jeweiligen auf der Seiltrommel 2 aufgewickelten Seils 30 bis 37, an welchem das jeweilige Seil 30 bis 37 tangential von der Seiltrommel 2 auf- und/oder abläuft, bezogen auf die Tragstruktur 20 zumindest im Wesentlichen ortsfest ist. D.h., eine Verdrehung der Seiltrommel 2 führt zu einer entsprechenden Verschiebung der Seiltrommel 2 relativ zur Tragstruktur 20, wobei der jeweilige Seilablaufpunkt bezüglich der Tragstruktur 20 im Wesentlichen ortsfest ist. Der jeweilige Seilablaufpunkt wurde in den Figuren 7 bis 14 aus Gründen der Übersichtlichkeit nicht eingezeichnet.

Zwischen dem jeweiligen Seilablaufpunkt und der jeweiligen Seilrolle 48 verläuft das jeweilige Seil 30 bis 37 bezüglich der Trommelachse 3 günstigerweise in tangentialer Richtung. Da die Seilablaufpunkte unbeweglich sind, kann die Anzahl der Seilrollen 48 der Laufkatze 43 minimiert werden, da der Auflaufwinkel des jeweiligen Seils 30 bis 37 von der Seiltrommel 2 zur jeweiligen Seilrolle 48 konstant bleibt. Günstigerweise sind die jeweiligen Seilrollen 48 so ausgerichtet und positioniert, dass das jeweilige abzulenkende Seil 30 bis 37 gerade, d.h. ohne Abweichung von einer Seilrillenebene der jeweiligen Seilrolle 48, vom jeweiligen Seilablaufpunkt in die Seilrille der jeweiligen Seilrolle 48 einläuft.

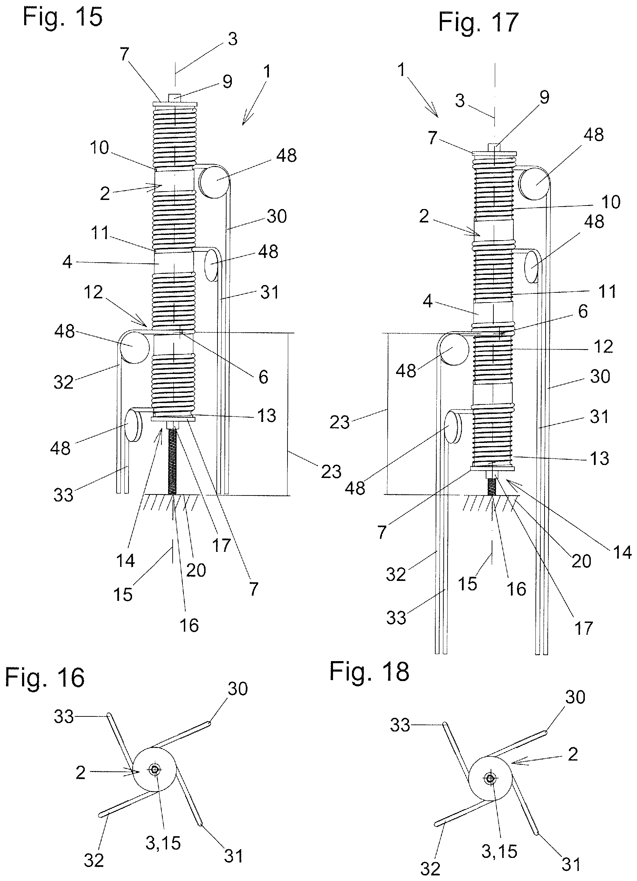

In den Fig. 15 bis 18 ist ein alternatives Ausführungsbeispiel einer Seilwindenanordnung 1 für einen Kran gezeigt. Hierbei ist vorgesehen, dass die Trommelachse 3, und damit auch die Spindelachse 15 des Spindeltriebs 14, vertikal ausgerichtet sind. Die Seile 30 bis 33 laufen im gezeigten Ausführungsbeispiel in vertikaler Richtung nach unten ab. Beispielhaft wurde für das Seil 32 der Seilablaufpunkt 6 eingezeichnet. Der Seilablaufpunkt 6 ist in Bezug auf die Tragstruktur 20, die in Fig. 15 und 17 nur schematisch angedeutet ist, ortsfest. In gleichem Ausmaß, mit welchem die Spindelmutter 17 entlang der Spindel 16 verschoben wird, wird auch die Seiltrommel 2 relativ zur Tragstruktur 20 verschoben. In den Fig. 15, 17 ist jeweils eine der beiden Endstellungen der Seilwindenanordnung 1 dargestellt, wobei ein Abstand 23 zwischen dem eingezeichneten Seilablaufpunkt 6 des Seils 32 und einer Bezugsebene der Tragstruktur 20 in den Endstellungen, und auch während der Verschiebung der Seiltrommel 2 von einer Endstellung in die andere Endstellung, konstant ist. Im Übrigen ist auch die Position der Seilrollen 48 bezüglich der Tragstruktur 20 ortsfest.

Die Fig. 16 und 18 sind identisch und zeigen, dass der von der Seiltrommel 2 ablaufende Abschnitt des jeweiligen Seils 30 bis 33 tangential bezogen auf die Trommelachse 3 ist.

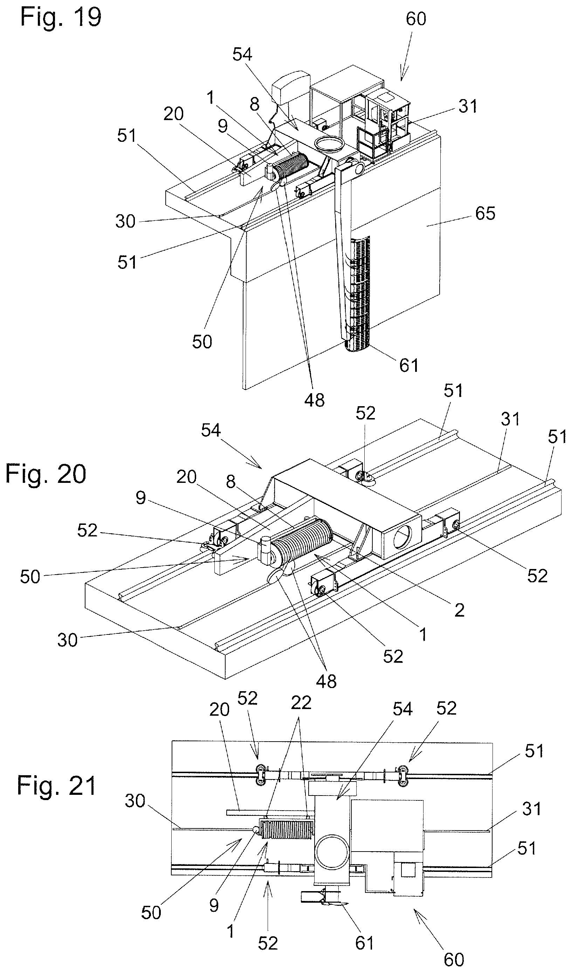

In den Fig. 19 bis 22 ist eine weitere Anwendung einer erfindungsgemäßen Seilwindenanordnung 1 bei einer Rechenreinigungseinrichtung 60 gezeigt. Die Rechenreinigungseinrichtung 60 dient zur Reinigung eines Rechens 65 einer nicht näher dargestellten Wasserkraftanlage, beispielsweise im Bereich eines Damms einer Wasserkraftanlage. Der Rechen 65 ist nur angedeutet und weist, wie dies bekannt ist, eine Vielzahl von Durchtrittsöffnungen für Wasser auf. Am Rechen 65 sammelt sich Treibgut, welches aus dem durch die Durchtrittsöffnungen hindurchfließenden Wasser abgeschieden wird. Zur Aufnahme von am Rechen 65 aufgestautem Treibgut weist die Rechenreinigungseinrichtung 60 eine Reinigungsvorrichtung 61 auf, die einen Reinigungsharken oder ein Greifwerkzeug aufweisen kann. Die Rechenreinigungseinrichtung 60 stützt sich mittels Fahrwerken 52 auf Fahrschienen 51 ab.

Die Rechenreinigungseinrichtung 60 weist einen Fahrantrieb 50 zum Verschieben einer verfahrbaren Transporteinheit 54 der Rechenreinigungseinrichtung 60 auf. Die Transporteinheit 54 könnte auch als Fahrgestell der Rechenreinigungseinrichtung 60 bezeichnet werden, vgl. Fig. 20. Im Ausführungsbeispiel ist vorgesehen, dass der Fahrantrieb 50 eine Seilwindenanordnung 1 gemäß der Erfindung aufweist, welche an der Transporteinheit 54 angeordnet ist. Auf die Seiltrommel 2 der Seilwindenanordnung 1 sind zwei Seile 30, 31 aufwickelbar bzw. aufgewickelt, wobei ein Ende eines jeweiligen Seils 30, 31 an der Seiltrommel 2 verankert ist. Die von der Seiltrommel 2 abgelegenen Enden der Seile 30, 31 sind an, nicht dargestellten, einander gegenüberliegenden Verankerungspunkten der Wasserkraftanlage verankert.

Im Ausführungsbeispiel weist der Fahrantrieb 50 der Transporteinheit 54 zwei Seilrollen 48 zur Ablenkung der von der Seiltrommel 2 ablaufenden Seile 30, 31 in einander entgegengesetzte Richtungen parallel zur Längserstreckung der Fahrschienen 51 auf. Die Seilrollen 48 sind in Bezug auf die Tragstruktur 20 ortsfest.

Eine Verdrehung der Seiltrommel 2 mittels des Trommelantriebs 9 führt gleichzeitig zum Aufwickeln eines der Seile 30, 31 und zum Abwickeln des anderen der beiden Seile 30, 31. Dadurch wird die Transporteinheit 54 entlang der Fahrschienen 51 verschoben.

Abweichend von den in den Fig. 19 bis 22 dargestellten Transporteinheit 54 einer Rechenreinigungseinrichtung 60, könnte es sich bei der Transporteinheit 54 auch um eine Laufkatze, beispielsweise eines Krans, wie er in den Fig. 7, 8 dargestellt ist, handeln. Mit dem Fahrantrieb 50 wäre es dann möglich, die Positionierung der Laufkatze entlang des Kranträgers des Krans zu verändern. Auch der Kran 40 selbst könnte in einer anderen Ausführungsvariante der Erfindung mittels eines derartigen Fahrantriebs entlang von Kranschienen oder, im Falle einer Bereifung, entlang des Untergrunds, verschiebbar sein, wobei dann zumindest eines der Fahrwerke des Krans einen Fahrantrieb mit einer Seilwindenanordnung aufweist.

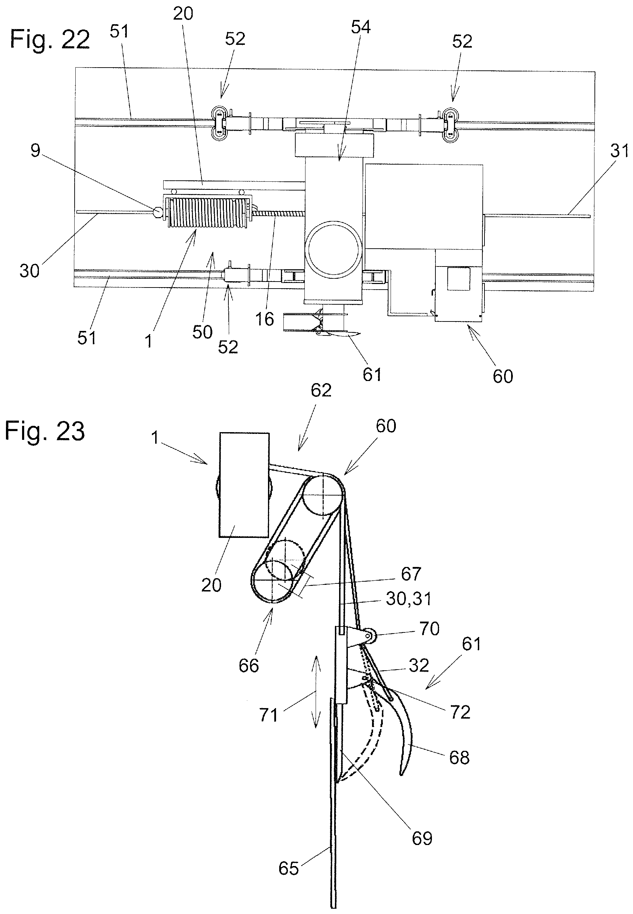

In den Fig. 23 bis 26 ist noch eine weitere Anwendung einer erfindungsgemäßen Seilwindenanordnung 1 bei einer Rechenreinigungseinrichtung 60 gezeigt. Die Rechenreinigungseinrichtung 60 weist eine als Greifwerkzeug ausgebildete Reinigungsvorrichtung 61 und eine Antriebsanordnung 62 zur Betätigung der Reinigungsvorrichtung 61 auf. Die Antriebsanordnung 62 umfasst die Seilwindenanordnung 1.

Die Reinigungsvorrichtung 61 ist entlang des Rechens 65 in vertikaler Richtung verschiebbar, vgl. die als Doppelpfeil in Fig. 23 eingezeichneten Verfahrrichtungen 71 der Reinigungsvorrichtung 61. Die Reinigungsvorrichtung 61 weist eine Vielzahl von Greifarmen 68 und einen Kamm 69 auf, wobei die Greifarme 68, gegenüber dem Kamm 69 um eine Schwenkachse 72 verschwenkbar sind. In Fig. 23 ist, aufgrund der Seitenansicht, nur einer der Greifarme 68 dargestellt. Alle Greifarme 68 sind günstigerweise miteinander verdrehfest verbunden, d.h. die Greifarme 68 sind gemeinsam um die Schwenkachse 72 verschwenkbar. In Fig. 23 ist ein geöffneter Zustand der Reinigungsvorrichtung 61 zur Aufnahme bzw. zum Freigeben von Treibgut in durchgezogenen Linien und eine geschlossene Stellung der Reinigungsvorrichtung 61 zum Greifen und Halten des Treibguts in gestrichelten Linien dargestellt. Derartige Reinigungsvorrichtungen 61 sind an und für sich bekannt.

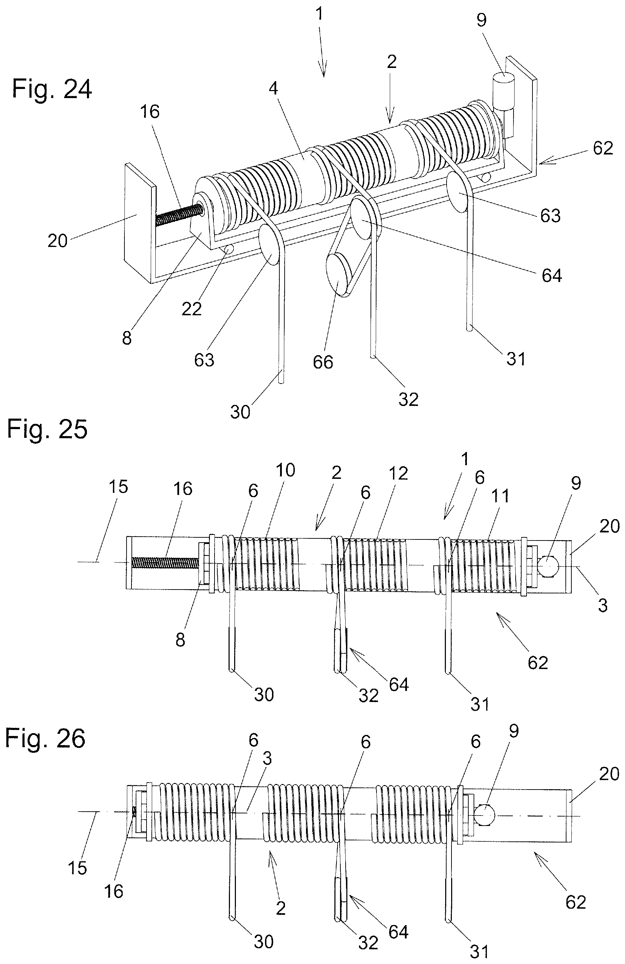

Die Antriebsanordnung 62 umfasst eine der bereits erläuterten Seilwindenanordnungen 1 zum Auf- und/oder Abwickeln von drei Seilen 30-32, vgl. Fig. 24. Weiters umfasst die Antriebsanordnung 62 zwei Seilrollen 63 zur Ablenkung der Seile 30, 31 und eine Doppelseilrolle 64 zur Ablenkung des Seils 32 und eine relativ zur Doppelseilrolle 64 verschiebbare Seilrolle 66. Die Seilrollen 63 und die Doppelseilrolle 64 sind bezüglich der Tragstruktur 20 ortsfest. Die verschiebbare Seilrolle 66 ist bezogen auf eine Richtung parallel zur Trommelachse 3 bezüglich der Tragstruktur 20 ortsfest. Die verschiebbare Seilrolle 66 ist im Ausführungsbeispiel in einer orthogonal zur Trommelachse 3 ausgerichteten Ebene relativ zur Doppelseilrolle 64 verschiebbar, wie dies ist in Fig. 23 schematisch dargestellt ist. Die zwei Endpositionen der verschiebbaren Seilrolle 66, welche entlang eines Verschiebewegs 67 verschiebbar ist, sind in durchgezogenen bzw. gestrichelten Linien eingezeichnet.

Das jeweilige freie Ende der Seile 30, 31 ist an der Reinigungsvorrichtung 61 verankert. Das Seil 32 läuft ausgehend von der Seiltrommel 2 in eine erste Seilrille der Doppelseilrolle 64 ein und in Richtung hin zur Seilrolle 66 aus der ersten Seilrille ab. Die Seilrolle 66 lenkt das Seil 32 in eine zweite Seilrille der Doppelseilrolle 64 um. Von der zweiten Seilrille der Doppelseilrolle 64 ist das Seil 32 zur Rechenreinigungsvorrichtung 61 geführt. An der Rechenreinigungsvorrichtung 61 ist eine Ablenkseilrolle 70 angeordnet, welche das Seil 32 zu einem Verankerungspunkt an den Greifarmen 68 ablenkt, vgl. Fig. 23, 24.

Die Verdrehung der Seiltrommel 2 der Seilwindenanordnung 1 führt zu einem synchronen Ablauf der Seile 30, 31 und 32. D.h. die Reinigungsvorrichtung 61 kann in einfacher Weise in vertikaler Richtung verstellt werden, ohne dass es zu einem Schräglauf der Reinigungsvorrichtung 61 kommt. Die in den Fig. 25, 26 eingezeichneten Seilablaufpunkte 6 der Seile 30 bis 32 sind im Sinne der Erfindung, bezogen auf die Tragstruktur 20, im Wesentlichen ortsfest. Hinsichtlich der Ausbildung der Seilwindenanordnung 1 wird wiederum auf die Erläuterungen zu den Fig. 1 und 2 verwiesen.

Durch Verschiebung der verschiebbaren Seilrolle 66 entlang des Verschiebewegs 67 relativ zur Doppelseilrolle 64 kann das freie Ende des Seiles 32 relativ zu den freien Enden der Seile 30, 31 bewegt werden. Da das Seil 32 an den Greifarmen 68 verankert ist, führt die Relativbewegung der verschiebbaren Seilrolle 66 zur Doppelseilrolle 64 durch entsprechende Verlängerung bzw. Verkürzung der freien Seillänge des an den Greifarmen 68 verankerten Seils 32 zur Verschwenkung der Greifarme 68 zwischen den oben genannten Zuständen, d.h. dem geöffneten Zustand und dem geschlossenen Zustand der Reinigungsvorrichtung 61, vgl. Fig. 23.

Wie bereits erläutert, ist die Reinigungsvorrichtung 61 in dem in den Fig. 22 bis 26 dargestellten Ausführungsbeispiel entlang des Rechens 65 in vertikaler Richtung verschiebbar. In einer anderen Ausführungsvariante könnte der Rechen 65 gegenüber einer Horizontalen um 45° bis 85°, vorzugsweise um 60° bis 80°, geneigt sein. Die Verfahrrichtungen 71 der Reinigungsvorrichtung 61 sind dann günstigerweise parallel zur Ausrichtung des geneigten Rechens 65 ausgerichtet.

In einer weiteren Ausführungsvariante könnte die in den Fig. 23-26 dargestellte Rechenreinigungseinrichtung 60 zusätzlich auch einen Fahrantrieb 50 aufweisen, mit welchem die Rechenreinigungseinrichtung 60 entlang von Fahrschienen 51 verschiebbar ist, wie dies bei der Rechenreinigungseinrichtung 60 gemäß der Fig. 19-22 gezeigt ist. D.h., die Rechenreinigungseinrichtung könnte dann zwei Seilwindenanordnungen 1 aufweisen, wobei eine der Seilwindenanordnungen 1 als Fahrantrieb 50 und eine zweite Seilwindenanordnung 1 als Antriebsanordnung 62 zum Betätigen der Reinigungsvorrichtung 61 dient.

### Legende

### zu den Hinweisziffern:

| | | | |
|---|---|---|---|
| 1 | Seilwindenanordnung | 34 | Seil |
| 2 | Seiltrommel | 35 | Seil |
| 3 | Trommelachse | 36 | Seil |
| 4 | Trommelmantel | 37 | Seil |
| 5 | Hohlraum | | |
| 6 | Seilablaufpunkt | 40 | Kran |
| 7 | Trommelflansch | 41 | Container |
| 8 | Lagergestell | 42 | Kranträger |
| 9 | Trommelantrieb | 43 | Laufkatze |
| 10 | Rille | 44 | Lastaufnahmevorrichtung |
| 11 | Rille | 45 | Kranfahrwerk |
| 12 | Rille | 46 | Steher |
| 13 | Rille | 47 | Laufkatzenfahrschiene |
| 14 | Spindeltrieb | 48 | Seilrolle |
| 15 | Spindelachse | 49 | Kranschiene |
| 16 | Spindel | | |
| 17 | Spindelmutter | 50 | Fahrantrieb |
| 18 | Übersetzungsgetriebe | 51 | Fahrschiene |
| 19 | Spindelantrieb | 52 | Fahrwerk |
| 20 | Tragstruktur | 54 | Transporteinheit |
| 21 | Seildurchlass | | |
| 22 | Stützrolle | 60 | Rechenreinigungseinrichtung |
| 23 | Abstand | 61 | Reinigungsvorrichtung |
| | | 62 | Antriebsanordnung |
| 30 | Seil | 63 | Seilrolle |
| 31 | Seil | 64 | Doppelseilrolle |
| 32 | Seil | 65 | Rechen |
| 33 | Seil | 66 | verschiebbare Seilrolle |
| 67 | Verschiebeweg | | |
| 68 | Greifarm | | |
| 69 | Kamm | | |
| 70 | Ablenkseilrolle | | |
| 71 | Verfahrrichtungen | | |
| 72 | Schwenkachse | | |

## Patentansprüche

1. Seilwindenanordnung (1), welche zumindest eine um eine Trommelachse (3) drehbar gelagerte Seiltrommel (2) zum Auf- und/oder Abwickeln zumindest eines Seils (30 - 37) und eine Tragstruktur (20) und einen Spindeltrieb (14) zum Verschieben der Seiltrommel (2) relativ zur Tragstruktur (20) umfasst, wobei der Spindeltrieb (14)
eine sich entlang einer Spindelachse (15) erstreckende Spindel (16) aufweist, und ein Seilablaufpunkt (6) des zumindest einen Seils (30 - 37), an welchem das Seil (30 - 37) tangential von der Seiltrommel (2) auf- und/oder abläuft, bezogen auf die Tragstruktur (20) zumindest im Wesentlichen ortsfest ist, wobei die
Spindelachse (15) koaxial zur Trommelachse (3) der Seiltrommel (2) angeordnet ist, und wobei die Seiltrommel (2) an einem Lagergestell (8) der Seilwindenanordnung (1) drehbar gelagert ist, und das Lagergestell (8) gemeinsam mit der Seiltrommel (2) relativ zur Tragstruktur (20) verschiebbar ist, **dadurch gekennzeichnet, dass** eine in die Spindel (16) eingreifende Spindelmutter (17) des Spindeltriebs (14) verdrehfest an der Seiltrommel (2) befestigt ist.

2. Seilwindenanordnung (1) nach Anspruch 1, **dadurch gekennzeichnet, dass** sich die Spindel (16), zumindest in einer Endstellung, zumindest abschnittsweise in einen Hohlraum (5) der Seiltrommel (2) hinein erstreckt.

3. Seilwindenanordnung (1) nach Anspruch 1 oder 2, **dadurch gekennzeichnet, dass** die Spindel (16) ein Außengewinde mit einer Ganghöhe aufweist, wobei die Ganghöhe zumindest dem Seildurchmesser des zumindest einen Seils (30 - 37) entspricht.

4. Seilwindenanordnung (1) nach Anspruch 3, **dadurch gekennzeichnet, dass** die Seiltrommel (2) einen Trommelmantel (4) mit zumindest einer spiralförmigen Rille (10 - 13) zur Aufnahme zumindest eines der Seile (30 - 37) aufweist, wobei eine Ganghöhe der spiralförmigen Rille (10 - 13) der Ganghöhe des Außengewindes der Spindel (16) entspricht.

5. Seilwindenanordnung (1) nach einem der Ansprüche 1 bis 4, **dadurch gekennzeichnet, dass** die Spindel (16) verdrehfest und, zumindest in axialer Richtung bezogen auf die Spindelachse (15), unverschiebbar an der Tragstruktur (20) festgelegt ist.

6. Seilwindenanordnung (1) nach einem der Ansprüche 1 bis 4 **dadurch gekennzeichnet, dass** der Spindeltrieb (14) einen Spindelantrieb (19) zur Verdrehung der Spindel (16) relativ zur Tragstruktur (20) aufweist.

7. Kran (40), insbesondere Portalkran, zum Transport zumindest eines Containers (41) oder einer sonstigen Last, wobei der Kran (40) zumindest eine, auf einem Kranträger (42) des Krans (40) verfahrbar gelagerte, Laufkatze (43) und eine Lastaufnahmevorrichtung (44) zur Verbindung mit dem Container (41) oder der sonstigen Last aufweist, wobei die Lastaufnahmevorrichtung (44) mittels Seilen (30 - 37) der Laufkatze (43) heb- und senkbar an der Laufkatze (43) hängt, **dadurch gekennzeichnet, dass** die Laufkatze (43) zumindest eine Seilwindenanordnung (1) nach einem der Ansprüche 1 bis 6 zum Auf- und/oder Abwickeln der Seile (30 - 37) der Laufkatze (43) aufweist.

8. Fahrantrieb (50) zum Verschieben einer entlang von Fahrschienen (47) verfahrbaren Transporteinheit (54), insbesondere einen Kran (40) oder eine, auf einem Kranträger (42) eines Krans (40) verfahrbar gelagerte, Laufkatze (43), **dadurch gekennzeichnet, dass** der Fahrantrieb (50) zumindest eine Seilwindenanordnung (1) nach einem der Ansprüche 1 bis 6 umfasst, und die Seilwindenanordnung (1) an der Transporteinheit (54) angeordnet ist.

9. Rechenreinigungseinrichtung (60) zur Reinigung eines Rechens (65), insbesondere einer Wasserkraftanlage, wobei die Rechenreinigungseinrichtung (60) eine Reinigungsvorrichtung (61), insbesondere einen Reinigungsharken oder ein Greifwerkzeug, zur Aufnahme von am Rechen (65) aufgestautem Treibgut und eine Antriebsanordnung (62) zur Betätigung der Reinigungsvorrichtung (61) aufweist, **dadurch gekennzeichnet, dass** die Antriebsanordnung (62) zumindest eine Seilwindenanordnung (1) nach einem der Ansprüche 1 bis 6 umfasst und/oder dass die Rechenreinigungseinrichtung (60) sich auf Fahrschienen (51) abstützt und einen, eine Seilwindenanordnung (1) nach einem der Ansprüche 1 bis 6 aufweisenden, Fahrantrieb (50) zum Verfahren der Rechenreinigungseinrichtung (60) entlang der Fahrschienen (51) aufweist.

## Claims

1. A cable winch arrangement (1), which comprises at least one cable drum (2) mounted rotatably about a drum axis (3) for winding and/or unwinding at least one cable (30 - 37), and a supporting structure (20), and a lead screw mechanism (14) for displacing the cable drum (2) in relation to the supporting structure (20), wherein the lead screw mechanism (14) has a spindle (16) which extends along a spindle axis (15), and a cable run-off point (6) for the at least one cable (30 - 37), at which the cable (30 - 37) runs up and/or down tangentially from the cable drum (2), is at least substantially fixed in position in relation to the supporting structure (20), wherein the spindle axis (15) is arranged coaxially with the drum axis (3) of the cable drum (2), and wherein the cable drum (2) is rotatably mounted on a bearing frame (8) of the cable winch arrangement (1), and the bearing frame (8) together with the cable drum (2) is displaceable in relation to the supporting structure (20), **characterised in that** a spindle nut (17) of the lead screw mechanism (14) which engages in the spindle (16) is fastened in a torsionally fixed manner to the cable drum (2).

2. A cable winch arrangement (1) according to claim 1, **characterised in that** the spindle (16), at least in an end position, extends at least in part into a cavity (5) of the cable drum (2).

3. A cable winch arrangement (1) according to claim 1 or 2, **characterised in that** the spindle (16) has an external thread with a thread pitch, the thread pitch corresponding to at least the cable diameter of the at least one cable (30 - 37).

4. A cable winch arrangement (1) according to claim 3, **characterised in that** the cable drum (2) has a drum casing (4) with at least one spiral-shaped groove (10 - 13) for receiving at least one of the cables (30 - 37), with a thread pitch of the spiral-shaped groove (10 - 13) corresponding to the thread pitch of the external thread of the spindle (16).

5. A cable winch arrangement (1) according to one of claims 1 to 4, **characterised in that** the spindle (16) is fixed on the supporting structure (20) in a torsionally fixed manner and, at least in the axial direction in relation to the spindle axis (15), non-displaceably.

6. A cable winch arrangement (1) according to one of claims 1 to 4, **characterised in that** the lead screw mechanism (14) has a spindle drive (19) for rotating the spindle (16) in relation to the supporting structure (20).

7. A crane (40), in particular gantry crane, for transporting at least one container (41) or other load, wherein the crane (40) has at least one trolley (43) which is mounted movably on a crane girder (42) of the crane (40) and a load suspension device (44) for connecting to the container (41) or other load, wherein the load suspension device (44) is suspended from the trolley (43) so that it can be raised and lowered by means of cables (30 - 37) of the trolley (43), **characterised in that** the trolley (43) has at least one cable winch arrangement (1) according to one of claims 1 to 6 for winding and/or unwinding the cables (30 - 37) of the trolley (43).

8. A travelling drive (50) for displacing a transport unit (54) which can be moved along travelling rails (47), in particular a crane (40), or a trolley (43) mounted movably on a crane girder (42) of a crane (40), **characterised in that** the travelling drive (50) comprises at least one cable winch arrangement (1) according to one of claims 1 to 6, and the cable winch arrangement (1) is arranged on the transport unit (54).

9. A screen cleaning means (60) for cleaning a screen (65), in particular of a hydroelectric plant, wherein the screen cleaning means (60) has a cleaning device (61), in particular a cleaning rake or a gripping tool, for picking up flotsam accumulated on the screen (65), and a drive arrangement (62) for actuating the cleaning device (63), **characterised in that** the drive arrangement (62) comprises at least one cable winch arrangement (1) according to one of claims 1 to 6 and/or **in that** the screen cleaning means (60) is supported on travelling rails (51) and has a travelling drive (50) having a cable winch arrangement (1) according to one of claims 1 to 6 for moving the screen cleaning means (60) along the travelling rails (51).

## Revendications

1. Agencement de treuil (1), qui comprend au moins un tambour de câble (2) monté rotatif autour d'un axe de tambour (3) pour enrouler et/ou dérouler au moins un câble (30-37), ainsi qu'une structure porteuse (20) et une transmission à vis (14) pour déplacer le tambour de câble (2) par rapport à la structure porteuse (20), la transmission à vis (14) comportant une vis (16) s'étendant le long d'un axe de vis (15), et un point de déroulement du câble (6) dudit au moins un câble (30-37), en lequel le câble (30-37) s'enroule ou se déroule tangentiellement par rapport au tambour de câble (2), étant, au moins essentiellement fixe par rapport à la structure porteuse (20), l'axe de vis (15) étant disposé coaxialement à l'axe de tambour (3) du tambour de câble (2), et le tambour de câble (2) étant monté rotatif sur un bâti de palier (8) de l'agencement de treuil (1), et le bâti de palier (8) étant mobile conjointement avec le tambour de câble (2) par rapport à la structure porteuse (20), **caractérisé en ce qu'**un écrou de vis (17) de la transmission à vis (14), lequel s'engage dans la vis (16), est fixé au tambour de câble (2) en étant bloqué en rotation.

2. Agencement de treuil (1) selon la revendication 1, **caractérisé en ce que** la vis (16), au moins dans une position d'extrémité, s'étend au moins en partie dans un espace creux (5) du tambour de câble (2).

3. Agencement de treuil (1) selon la revendication 1 ou 2, **caractérisé en ce que** la vis (16) présente un filetage extérieur avec un pas de filetage, le pas de filetage correspondant au moins au diamètre dudit au moins un câble (30-37).

4. Agencement de treuil (1) selon la revendication 3, **caractérisé en ce que** le tambour de câble (2) comporte une surface de tambour (4) avec au moins une rainure hélicoïdale (10-13) destinée à recevoir au moins l'un des câbles (30-37), un pas de la rainure hélicoïdale (10-13) correspondant au pas du filetage extérieur de la vis (16).

5. Agencement de treuil (1) selon l'une des revendications 1 à 4, **caractérisé en ce que** la vis (16) est fixée bloquée en rotation sur la structure porteuse (20) et de manière non déplaçable, au moins en direction axiale par rapport à l'axe de vis (15).

6. Agencement de treuil (1) selon l'une des revendications 1 à 4, **caractérisé en ce que** la transmission à vis (14) comprend un entraînement de vis (19) destiné à faire tourner la vis (16) par rapport à la structure porteuse (20).

7. Grue (40), en particulier une grue portique, destinée au transport d'au moins un conteneur (41) ou une autre charge, la grue (40) comprenant au moins un chariot roulant (43) monté déplaçable sur un support de grue (42) de la grue (40), et un dispositif de prise de charge (44) pour la liaison avec le conteneur (41) ou avec ladite autre charge, le dispositif de prise de charge (44) étant suspendu au chariot roulant (43) par des câbles (30-37) du chariot roulant (43) de manière à pouvoir être levé ou monté, **caractérisée en ce que** le chariot roulant (43) comprend au moins un agencement de treuil (1) selon l'une des revendications 1 à 6 pour enrouler et/ou dérouler les câbles (30-37) du chariot roulant (43).

8. Système d'entraînement (50) pour déplacer une unité de transport (54) déplaçable le long de rails de roulement (47), en particulier une grue (40) ou un chariot roulant (43) monté déplaçable sur un support de grue (42) d'une grue (40), **caractérisé en ce que** le système d'entraînement (50) comprend au moins un agencement de treuil (1) selon l'une des revendications 1 à 6, et **en ce que** l'agencement de treuil (1) est disposé sur l'unité de transport (54).

9. Dispositif de nettoyage de grilles de retenue (60) destiné au nettoyage d'une grille de retenue (65), en particulier d'une centrale hydroélectrique, le dispositif de nettoyage de grille de retenue (60) comportant un dispositif de nettoyage (61), en particulier un râteau de nettoyage ou un outil de préhension, pour recueillir des déchets accumulés sur la grille de retenue (65), et un dispositif d'entraînement (62) pour actionner le dispositif de nettoyage (61), **caractérisé en ce que** le dispositif d'entraînement (62) comprend au moins un agencement de treuil (1) selon l'une des revendications 1 à 6, et/ou **en ce que** le dispositif de nettoyage de grille de retenue (60) repose sur des rails de roulement (51) et comprend un système d'entraînement (50) équipé d'un agencement de treuil (1) selon l'une des revendications 1 à 6, pour déplacer le dispositif de nettoyage de grille de retenue (60) le long des rails de roulement (51).
